# EUROPEAN PATENT SPECIFICATION

(11) **EP 1 903 797 B1**
(45) Date of publication and mention of the grant of the patent: **14.08.2013**
(21) Application number: 07018324.9
(22) Date of filing: 18.09.2007
(51) Int. Cl.: H04N 5/76

(54) **Program data recording apparatus**
Programmdatenaufzeichnungsvorrichtung
Appareil d'enregistrement de données de programme

(30) Priority: 19.09.2006 JP 2006253112
(43) Date of publication of application: 26.03.2008
(73) Proprietor: Funai Electric Co., Ltd., Daito-shi, Osaka 574-0013 (JP)
(72) Inventor: Suzu, Hirokazu, Daito-shi Osaka 574-0013 (JP)
(74) Representative: Grünecker, Kinkeldey, Stockmair & Schwanhäusser

(56) References cited:
- EP-A1- 1 622 371
- US-A1- 2006 064 721

## Description

The present invention relates to a program data recording apparatus.

When a user programs a VCR or the like to record a first program which is broadcasted after a program having a high probability that the program is extended, such as a professional baseball program, recording of the first program and recording to another program (second program) overlap each other. In such a case, there is a conventionally known program data recording apparatus in which a user previously sets a precedence for the first program and the other second program, and one of the programs having higher precedence is recorded (e.g., see Japanese Patent Application Laid-open Publication No. 11-259929). There is also a known technique in which it is determined whether there is a possibility that a certain program is extended based on presence or absence in EPG data of a keyword such as "maximum extension" , and when there is such a possibility, extended time is calculated, and the recording ending time is delayed by the extended time (e.g., see Japanese Patent Application Laid-open Publication No. 2004-289565, Japanese Patent Application Laid-open Publication No. 2005-159526, and Japanese Patent Application Laid-open Publication No. 10-320868).

However, when a user programs a VCR or the like to record a program which is broadcasted after a program which may be extended as in Japanese Patent Application Laid-open Publication No. 11-259929, it is troublesome to previously set precedence each time.

US patent application publication 2006/0064721 A1 describes an electronic program guide that is synchronized in real time with the actual programs so as to account for possible time shifts or extensions in the broadcast programs. The start and end times of TV programs are updated before and during the broadcast. EPG information is provided from a centralized EPG server to user devices via a network. EPG information is preferably filtered in the user device and the part of the information that is relevant for the particular user is stored at the user device. The user devices are provided within the update information in real time. Recording conflicts are resolved by way of a plurality of criteria, including precedence settings.

It is an object of the present invention to provide an improved program data recording apparatus capable of easily setting preference of a program after a broadcast of a previous program which is extended.

This is achieved by the features of the independent claims. Further features and advantages of the present invention are the subject matter of dependent claims.

According to an aspect of the present invention, there is provided a program data recording apparatus for storing a program data based on a broadcast signal in a storage medium, comprising:
a programmed-to-record storage section for storing a title of the program data to be stored in the storage medium, and programmed-to-record program information including a channel, a storing-starting time and a storing-ending time;
a storing control section for controlling a storing operation for storing the program data in the storage medium based on the programmed-to-record program information stored in the programmed-to-record storage section;
an extended program retrieving section for retrieving an extended program having a possibility of extending a broadcast time in accordance with a preset extension condition by referring to program information included in an electronic program guide data or program information included in the program data;
a programmed-to-record program retrieving section for referring to the programmed-to-record storage section when the extended program retrieving section retrieves the extended program, and for retrieving the programmed-to-record program information of the program data to be stored in the storage medium within a predetermined time from a broadcast-starting time of the extended program;
a determining section for obtaining an extended time of the extended program from the electronic program guide data, and for determining whether there is programmed-to-record program information having an overlapped broadcast time which overlaps for the extended time when the extended time is added to the programmed-to-record program information retrieved by the programmed-to-record program retrieving section;
a setting section for setting a precedence in the programmed-to-record program information having the overlapped broadcast time by a preset precedence condition when the determining section determines that there is the programmed-to-record program information having the overlapped broadcast time; and
an updating section for updating the programmed-to-record storage section such that the programmed-to-record program information having a highest precedence which is set by the setting section becomes the programmed-to-record program information of the program data to be stored in the storage medium during the overlapped broadcast time, wherein
the storing control section stores the program data in the overlapped broadcast time into the storage medium based on the programmed-to-record program information updated by the updating section,
the program data recording apparatus includes a title storage section for storing the title of the program data stored in the storage medium,
the setting section sets a higher precedence to the programmed-to-record program information including the larger number of program data having the same title stored in the title storage section among the programmed-to-record program information having the overlapped broadcast time,
the title storage section includes overwritable/non-overwritable information concerning whether the program data stored in the storage medium is overwritable or not,
the setting section sets the precedence of the program data stored in the title storage section, which is an overwritable program data, lower than the precedence of the program data stored in the title storage section, which is a non-overwritable program data,
the programmed-to-record program information includes information concerning a genre of a program,
the program data recording apparatus includes a precedence condition storage section for storing the genre of the program and the precedence so as to correspond to each other,
the setting section sets the precedence of the programmed-to-record program information having the overlapped broadcast time based on the precedence corresponding to the genre of the program stored in the precedence condition storage section,
the setting section refers to the electronic program guide data, determines whether the programmed-to-record program information having the overlapped broadcast time is rebroadcasted, and sets the precedence of a program which is rebroadcasted lower than the precedence of a program which is not rebroadcasted,
the storing control section adds storing-incompletion information to the program data which is stored based on the programmed-to-record program information and stores the program data in the storage medium when there is a time in which the program data is not stored in the storage medium in the programmed-to-record program information during the overlapped broadcast time, and
the program data recording apparatus includes a display control section for determining whether the storing-incompletion information is added to the program data when the program data stored in the storage medium is replayed, and for displaying that a storing of the program data is incomplete on a display section when it is determined that the storing-incompletion information is added to the program data.

The above and other objects, advantages and features of the present invention will become more fully understood from the detailed description given hereinbelow and the appended drawings which are given by way of illustration only, and thus are not intended as a definition of the limits of the present invention, and wherein:
FIG. 1 is a schematic block diagram of a digital broadcast recording apparatus according to an embodiment of the present invention;
FIG. 2 is a block diagram showing a structure of the digital broadcast recording apparatus of an embodiment of the invention;
FIG. 3A is a diagram showing a data structure of a programmed-to-record data file of an embodiment of the invention;
FIG. 3B is a diagram showing a data structure of a preservation data file of an embodiment of the invention;
FIG. 4A is a diagram showing an electronic program table of an embodiment of the invention before an extended program is extended;
FIG. 4B is a diagram showing an electronic program table of an embodiment of the invention after the extended program is extended;
FIG. 5 is a flowchart for explaining a renewing operation of a programmed-to-record data file of the digital broadcast recording apparatus of an embodiment of the invention;
FIG. 6 is a flowchart for explaining a storing operation of program data of the digital broadcast recording apparatus of an embodiment of the invention; and
FIG. 7 is a flowchart for explaining a display control operation of the digital broadcast recording apparatus of an embodiment of the invention when program data is replayed.

The preferred embodiment for carrying out a program data recording apparatus will be explained in detail with reference to the drawings. In the embodiment, a digital broadcast recording apparatus will be explained as a typical example of the program data recording apparatus.

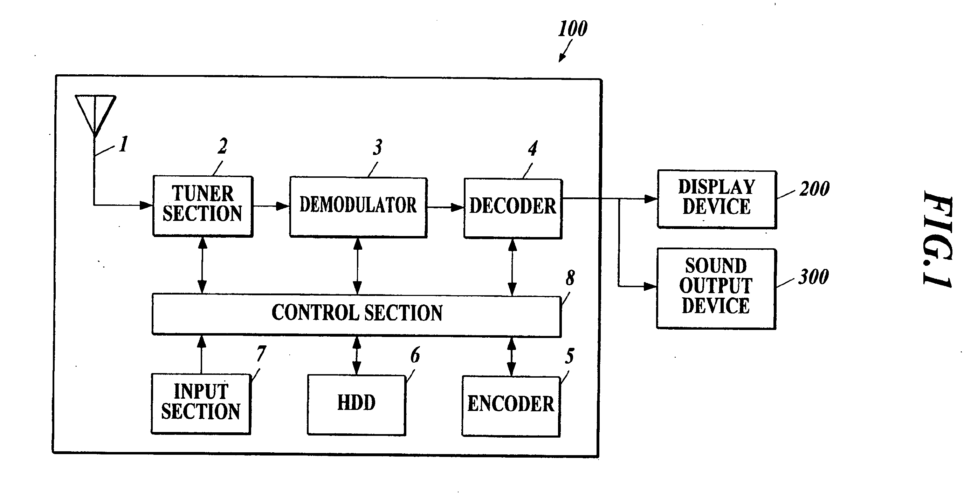

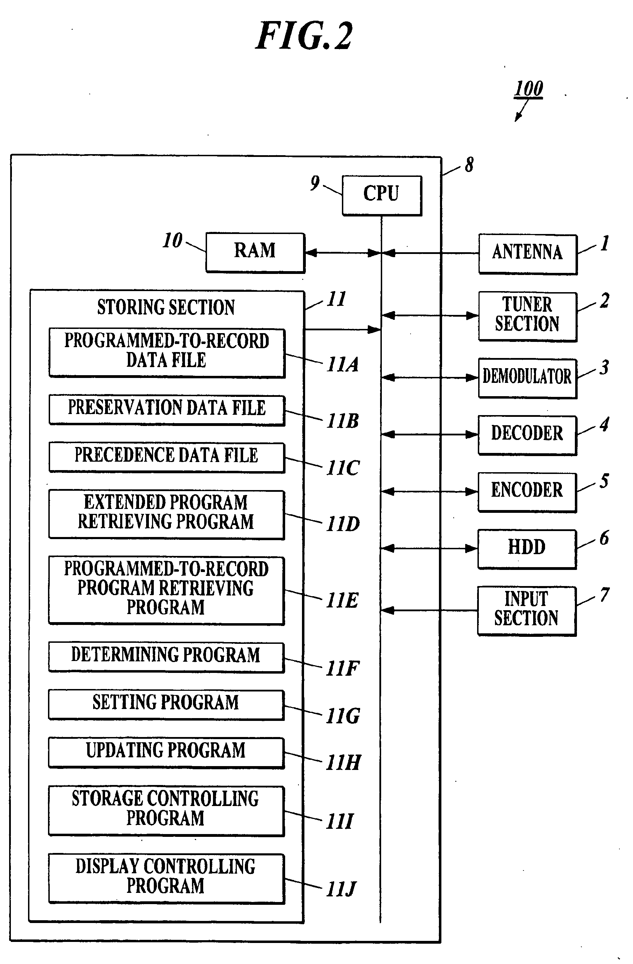

First, the digital broadcast recording apparatus 100 according to an embodiment of the present invention will be explained with reference to FIGS. 1 and 2. As shown in FIGS. 1 and 2, the digital broadcast recording apparatus 100 of the embodiment includes an antenna 1, a tuner section 2, a demodulator 3, a decoder 4, an encoder 5, a HDD 6, an input section and a control section 8. The digital broadcast recording apparatus 100 is connected to a display device 200 and a sound output device 300.

The antenna 1 is for example, a parabolic antenna or an UHF antenna. The antenna 1 receives broadcast wave including digital broadcast signals such as ground wave digital broadcast, BS/CS broadcast, and outputs RF signals such as ground wave digital signals, BS/CS broadcast signals to the tuner section 2. When broadcast is received through a CATV line, a connection cable (not shown) may be comprised.

The tuner section 2 includes a mixer (not shown), a selection circuit (not shown), and an A/D converter circuit (not shown), etc. An RF signal which is input from the antenna 1 by a mixer or a selection circuit is converted into an IF (Intermediate Frequency) signal of a channel desired by a user, and a generated IF signal is converted into digital data by the A/D converter circuit.

The demodulator 3 demodulates digital data which is input from the tuner section 2 and outputs the same to the decoder 4.

The decoder 4 decodes digital data which is input from the demodulator 3 to produce program image data (program data) and program sound data (program data), and outputs the same to the display device 200 and the sound output device 300.

The encoder 5 encodes the program image data and program sound data which are output from the decoder 4 through a CPU 9, and outputs the same to the HDD 6.

The HDD 6 comprises a magnetic storage medium. The HDD 6 stores the program image data and program sound data which are input from the encoder 5, and functions as a storage medium.

The input section 7 .comprises various keys through which various operation signals are input. The input section 7 is operated by a user, and various operation signals are output to the control section 8.

As shown in FIG. 2, the control section 8 comprises the CPU (Central Processing Unit) 9, a RAM(Random Access Memory) 10 and the storage section 11.

The CPU 9 reads a processing program stored in the storage section 11, develops and executes the same in the RAM 12, and controls the entire digital broadcast recording apparatus 100.

The RAM 12 develops a processing program executed by the CPU 9 in a program storage region in the RAM 12, and stores, in the data storage region, the input data and a processing result generated when the processing program is executed.

The storage section 11 includes a storage medium (not shown) in which a program and a data are previously stored. This storage medium comprises a semiconductor memory for example. The storage section 11 stores various data sets and various processing programs which the CPU 12 realizes a function of controlling the entire digital broadcast recording apparatus 100. The storage section 11 also stores data processed by executing these programs. More specifically, as shown in FIG. 2, the storage section 11 stores a programmed-to-record data file 11A, a preservation data file 11B, a precedence data file 11C, a extended program retrieving program 11D, a programmed-to-record program retrieving program 11E, a determining program 11F, a setting program 11G, an updating program 11H, a storage controlling program 11I and a display controlling program 11J.

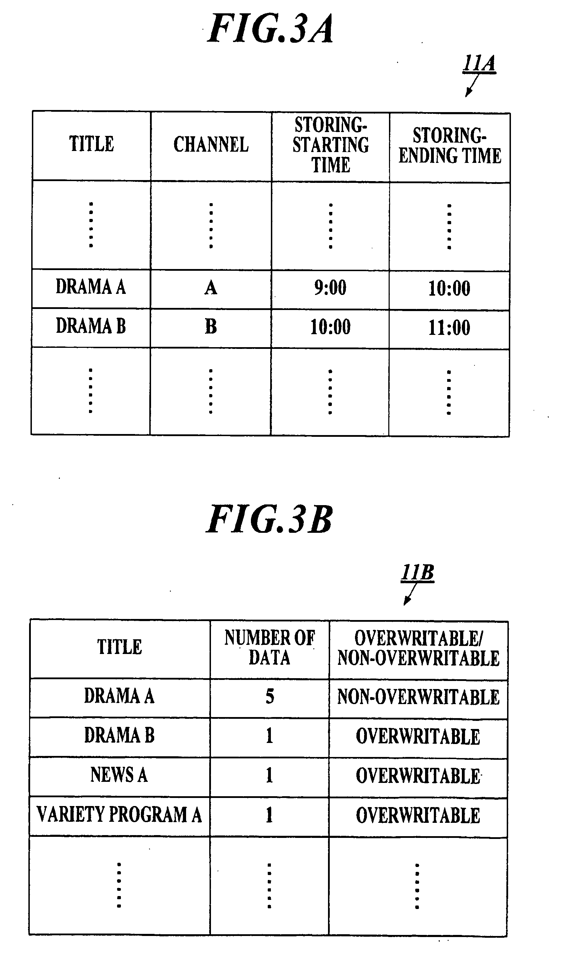

As shown in FIG. 3A, in the programmed-to-record data file 11A, a title of program data stored in the HDD 6, and programmed-to-record program information including a channel, storing-starting time and storing-ending time are stored in association with each other. The storage section 11 stores the programmed-to-record data file 11A, and functions as programmed-to-record storage section.

As shown in FIG. 3B, the preservation data file 11B stores, in association with each other, a title of the program data sets stored in the HDD 6, the number of the program data sets, and
overwritable/non-overwritable information concerning whether the program data can be overwritten. The storage section 11 stores the preservation data file 11B, and functions as a title storage section.

The precedence data file 11C stores a genre and precedence in association with each other. The storage section 11 stores the precedence data file 11C, and functions as a precedence condition storage section.

The extended program retrieving program 11D makes the CPU 9 realize a function of retrieving an extended program whose broadcast time may be extended in accordance with preset extension condition by referring to an EPG (Electronic Program Guide) data or program information included in the program data.

More specifically, the extended program retrieving program 11D makes the CPU 9 realize a function of retrieving an extended program by retrieving a title of extended program whose broadcast may be extended in accordance with the preset extension condition such as professional baseball broadcast (night game) and football broadcast while referring to the EPG data.

When the CPU 9 executes the extended program retrieving program 11D, the CPU 9 functions as an extended program retrieving section.

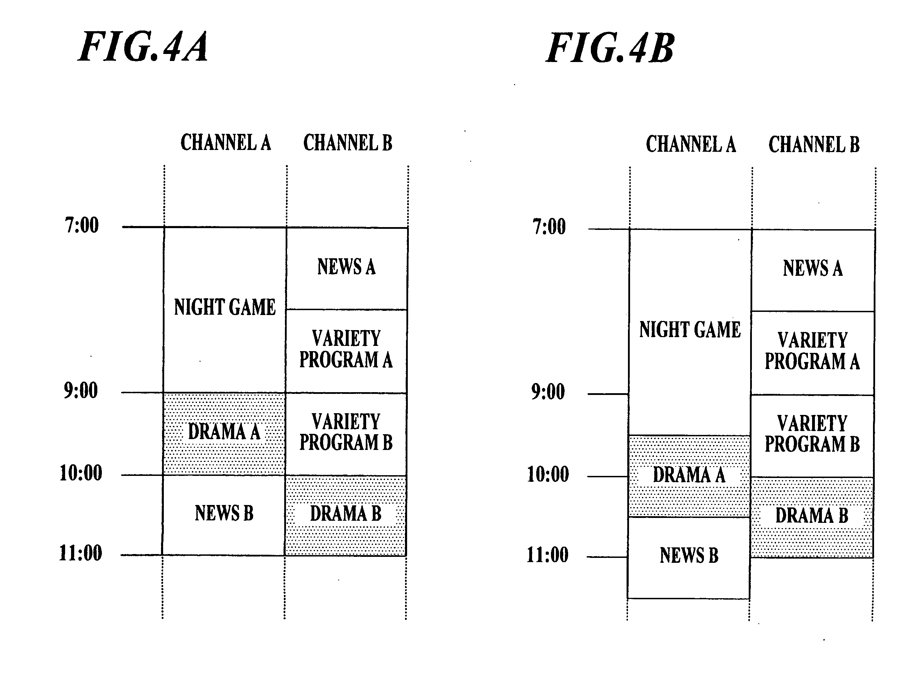

FIG. 4A and FIG. 4B show one example of an electronic program table based on the EPG data. FIG. 4A shows an electronic program table before a night game is extended, and FIG. 4B shows an electronic program table after a night game is extended. In the electronic program tables shown in FIG. 4A and FIG. 4B, program frames stored in the programmed-to-record data file 11A are shows with hatching.

In FIG. 4A, in a channel A, night game is broadcasted at 7:00 to 9:00, drama A is broadcasted at 9:00 to 10:00, news B is broadcasted at 10:00 to 11:00, and in a channel B, news A is broadcasted at 7:00 to 8:00, variety program A is broadcasted at 8:00 to 9:00, variety program B is broadcasted at 9:00 to 10:00, and drama B is broadcasted at 10:00 to 11:00.

In FIG. 4B, in a channel A, night game is broadcasted at 7:00 to 9:30, drama A is broadcasted at 9:30 to 10:30, news B is broadcasted at 10:30 to 11:30, and in a channel B, news A is broadcasted at 7:00 to 8:00, variety program A is broadcasted at 8:00 to 9:00, variety program B is broadcasted at 9:00 to 10:00, and drama B is broadcasted at 10:00 to 11:00.

In FIG. 4A and FIG. 4B, the program frame of the drama A and the program frame of the drama B are shown with hatching, and the dramas A and B are stored in the programmed-to-record data file 11A as titles of program data stored in the HDD 6. More specifically, the drama A as a title of program data to be stored in the HDD 6, time 9:00 as storing starting time of the drama A, and time 10:00 as storing ending time of the drama A are stored in the programmed-to-record data file 11A in association with each other. The title drama B, the storing starting time 10:00 and the storing ending time 11:00 are stored in the programmed-to-record data file 11A in association with each other.

When the CPU 9 executes the extended program retrieving program 11D, a night game is retrieved as the extended program.

The programmed-to-record program retrieving program 11E makes the CPU 9 realize a function of referring to the programmed-to-record data file 11A and retrieving programmed-to-record program information of program data to be stored in the HDD 6 within predetermined time (e.g., at 5:00 of next day) from the broadcast-starting time of the extended program when the extended program retrieving program 11D is executed and an extended program is retrieved.

For example, the CPU 9 executes the extended program retrieving program 11D and when night game is retrieved in the electronic program table shown in FIG. 4A, the CPU 9 executes the programmed-to-record program retrieving program 11E to retrieve the programmed-to-record data file 11A, and retrieve the programmed-to-record program information of dramas A and B to be stored in the HDD 6 within predetermined time from the broadcast-starting time of the night game. Here, the predetermined time is switching time (e.g., 5:00 of next day) between broadcast of a current day and broadcast of next day from broadcast-starting time of an extended program for example.

When the CPU 9 executes the programmed-to-record program retrieving program 11E, the CPU 9 functions as the programmed-to-record program retrieving section.

The determining program 11F makes the CPU 9 obtain extended time of an extended program from the EPG data, and when the extended time is added to programmed-to-record program information retrieved by executing the programmed-to-record program retrieving program 11E, the determining program 11F realizes a function of determining whether there are programmed-to-record program information sets having overlapped broadcast time. Here, the broadcast time corresponds to time from storing-starting time to storing-ending time.

For example, as shown in FIG. 4A and FIG. 4B, when broadcast of a night game is extended, the CPU 9 executes the programmed-to-record program retrieving program 11E, and retrieves storing-starting time 9:00 and storing-ending time 10:00 as programmed-to-record program information of the drama A, and retrieves storing-starting time 10:00 and storing-ending time 11:00 as the programmed-to-record program information of the drama B. Next, the CPU 9 executes the determining program 11F, and obtains 30 minutes as extended time of the night game from character data such as "extendable up to 9:30 at maximum", the 30 minutes is added to the storing-ending time of the programmed-to-record program information of the drama A which is a program of the same channel A as the night game, and the storing-ending time is changed to 10:30. In this case, when the programmed-to-record program information of the drama A to which extended time of 30 minutes is added and the programmed-to-record program information of the drama B are compared with each other, broadcast time of the drama A and the broadcast time of the drama B overlapped between 10:00 to 10:30. The CPU 9 executes the determining program 11F, and the CPU 9 determines that programmed-to-record program information of the drama A and the programmed-to-record program information of the drama B have overlapped broadcast time.

When the CPU 9 executes the determining program 11F, the CPU 9 functions as the determining section.

The setting program 11G makes the CPU 9 execute the determining program 11F, and when it is determined that there are programmed-to-record program information sets having overlapped broadcast time, the setting program 11G makes the CPU 9 realize a function of setting precedence in the programmed-to-record program information having the overlapped broadcast time in accordance with preset precedence condition.

More specifically, the setting program 11G makes the CPU 9 realize a function of allocating higher precedence to programmed-to-record program information having the higher number of program data sets having the same title stored in the preservation data file 11B among programmed-to-record program information having overlapped broadcast time. For example, as shown in FIG. 3B, the number of data sets of the drama A stored in the preservation data file 11B is five, and the number of data sets of the drama B is one. Therefore, the CPU 9 executes the setting program 11G, and sets higher precedence to the programmed-to-record program information of drama A than precedence of the programmed-to-record program information of the drama A.

The setting program 11G makes the CPU 9 realize a function of setting precedence of overwritable program data stored in the preservation data file 11B lower than precedence of non-overwritable program data. For example, as shown in FIG. 3B, the drama A is non-overwritable and the drama B is overwritable in the preservation data file 11B. Therefore, the CPU 9 executes the setting program 11G, and sets precedence of the programmed-to-record program information of the drama A higher than precedence of the programmed-to-record program information of the drama B.

The setting program 11G makes the CPU 9 realize a function of obtaining genre information of a program from a title (e.g., drama A or news A) of program data stored in the programmed-to-record data file 11A, and for referring to the precedence data file 11C, and for setting precedence of programmed-to-record program information having overlapped broadcast time.

The setting program 11G makes the CPU 9 realize a function of referring to EPG data, for determining whether there is programmed-to-record program information having overlapped broadcast time which is rebroadcasted, and for setting precedence of program which will be rebroadcasted lower than precedence of program which will not be rebroadcasted.

The CPU 9 executes the setting program 11G, thereby applying, in arbitrary order, the number of program data sets having the same title stored in the preservation data file 11B, overwritable/non-overwritable information stored in the preservation data file 11B, precedence stored in the precedence data file 11C, and precedence condition concerning whether a program will be rebroadcasted, and sets precedence of programmed-to-record program information having the overlapped broadcast time.

More specifically, the CPU 9 executes the setting program 11G, the CPU 9 determines which one of programmed-to-record program information having overlapped broadcast time has the greatest number of program data sets having the same title stored in the preservation data file 11B, and when the number of program data sets having the same title is the same, the CPU 9 refers to the overwritable/non-overwritable information of the preservation data file 11B and determines which programmed-to-record program information is non-overwritable, and when it is determined that both programmed-to-record program information sets are non-overwritable or overwritable, the CPU 9 determines which one of genres of programmed-to-record program information has higher precedence stored in the precedence data file 11C, and when it is determined that the precedence is the same, the CPU 9 determines which one of the programmed-to-record program information sets will not be rebroadcasted, and the CPU 9 sets precedence of that programmed-to-record program information.

When the CPU 9 executes the setting program 11G, the CPU 9 functions as the setting section.

The updating program 11H makes the CPU 9 realize a function of renewing the programmed-to-record data file 11A such that programmed-to-record program information having the highest precedence which is set when the CPU 9 executes the setting program 11G becomes programmed-to-record program information of program data stored in the HDD 6 at the overlapped broadcast time.

More specifically, as shown in FIG. 4A and FIG. 4B, when broadcast time of a night game is extended and broadcast time of the drama A and broadcast time of the drama B overlap each other from 10:00 to 10:30, the updating program 11H makes the CPU 9 realize a function of renewing the programmed-to-record data file 11A such that one of programmed-to-record program information sets having higher precedence which is set by executing the setting program 11G becomes programmed-to-record program information of program data to be stored in the HDD 6. When the CPU 9 executes the updating program 11H, the CPU 9 functions as the renewing section.

The storage controlling program 11I makes the CPU 9 control the storing operation of program data into the HDD 6 based on the programmed-to-record program information stored in the programmed-to-record data file 11A. More specifically, the storage controlling program 11I makes the CPU 9 determine whether it's time to start the recording operation which is stored in the programmed-to-record data file 11A, and when it is determined that It's time to start the recording operation, the tuner section 2, the demodulator 3, the decoder 4 and the encoder 5 are controlled, the recording operation of the program data in the channel stored in the programmed-to-record data file 11A is started, it is determined whether it's time to end the recording operation stored in the programmed-to-record data file 11A, and when it is determined that it's time to end the recording operation, the recording operation of the program data in the channel into the HDD 6 is completed.

When there is programmed-to-record program information having overlapped broadcast time due to extended program, the storage controlling program 11I makes the CPU 9 realize a function of storing the program data at the overlapped broadcast time into the HDD 6 based on the programmed-to-record program information which is renewed by executing the updating program 11H.

When there is programmed-to-record program information having overlapped broadcast time due to an extended program or when there is time which is not stored in the HDD 6 in the programmed-to-record program information in the overlapped broadcast time, the storage controlling program 11I makes the CPU 9 realize a function of adding storing-incompletion information to the program data stored based on the programmed-to-record program information and storing the same in the HDD 6. More specifically, the CPU 9 executes the storage controlling program 11I, when a night game is extended from 10:00 to 10:30 and broadcast time of drama A and broadcast time of the drama B overlap each other, and when precedence of the programmed-to-record program information of the drama A is higher than precedence of the programmed-to-record program information of the drama B and as a result, program data of the drama B is not stored in the HDD 6 from 10:00 to 10:30, the storage controlling program 11I makes the CPU 9 realize a function of adding the storing-incompletion information to the program data of the drama B stored in the HDD 6 after 10:30 and storing the same in the HDD 6.

When the CPU 9 executes the storage controlling program 11I, the CPU 9 functions as the storing control section.

The display controlling program 11J makes the CPU 9 realize a function of determining whether storing-incompletion information is added to program data when the program data stored in the HDD 6 is replayed, and when the CPU 9 determines that the storing-incompletion information is added to the program data, the display controlling program 11J makes the display device 200 display a predetermined display showing the storing operation of the program data is incomplete. When the CPU 9 executes the display controlling program 11J, the CPU functions as the display control section.

The display device 200 includes an LCD (Liquid Crystal Display) or a PDP (Plasma Display Panel), and displays image based on program image data which is output from the decoder 4.

The display device 200 shows a predetermined display showing that program data is stored incompletely.

The sound output device 300 includes a speaker, and outputs sound based on the program sound data which is output from the decoder 4.

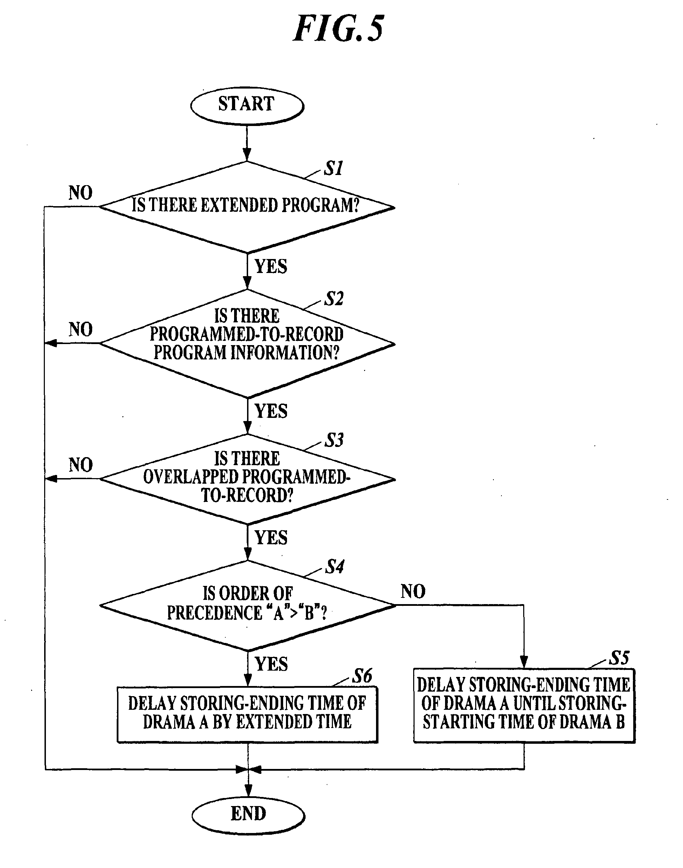

The renewing operation of the programmed-to-record data file 11A of the digital broadcast recording apparatus 100 according to the embodiment having the above-described structure will be explained with reference to a flowchart in FIG. 5.

First, the CPU 9 executes the extended program retrieving program 11D, refers to the EPG data, retrieves a title of extended program which may be extended such as a night game, thereby retrieving extended program, and determines whether extended program is retrieved (step S1).

When the CPU 9 determines that the extended program is not retrieved in step S1 (step S1; No), this processing is completed.

When the CPU 9 determines that the extended program is retrieved in step S1 (step S1; Yes), the CPU 9 executes the programmed-to-record program retrieving program 11E and refers to the programmed-to-record data file 11A to retrieve programmed-to-record program information of program data to be stored in the HDD 6 within predetermined time from the broadcast-starting time of the extended program, and it is determined whether there is programmed-to-record program information of program data to be stored in the HDD 6 within predetermined time from the broadcast-starting time of the extended program (step S2).

When it is determined whether there is not programmed-to-record program information of program data to be stored in the HDD 6 within predetermined time from the broadcast-starting time of the extended program (step S2; No), this processing is completed.

When it is determined whether there is not programmed-to-record program information of program data to be stored in the HDD 6 within predetermined time from the broadcast-starting time of the extended program (step S2; Yes), the CPU 9 executes the determining program 11F to obtain extended time of the extended program from the EPG data, adds the obtained extended time to the programmed-to-record program information retrieved in step S2, and determines whether there is programmed-to-record program information having overlapped broadcast time (step S3).

When the CPU 9 determines that there is no programmed-to-record program information having overlapped broadcast time (step S3; No), this processing is completed.

When the CPU 9 determines in step S3 that there is programmed-to-record program information having overlapped broadcast time (step S3; Yes), the CPU 9 executes the setting program 11G to set precedence in the programmed-to-record program information having the overlapped broadcast time, the CPU 9 executes the updating program 11H to determine which one of programmed-to-record program information sets has the highest precedence from the programmed-to-record program information sets having overlapped broadcast time. For example, in the case of FIG. 4B, when broadcast time of the programmed-to-record program information of the drama A and broadcast time of the programmed-to-record program information of the drama B overlap each other, it is determined whether precedence of the programmed-to-record program information of the drama A is higher than precedence of the programmed-to-record program information of the drama B (step S4).

When the CPU 9 determines in step S4 that the precedence of the programmed-to-record program information of the drama B is higher than the precedence of the programmed-to-record program information of the drama A (step S4; No), the CPU 9 renews the programmed-to-record data file 11A such that the programmed-to-record program information of the drama B becomes the programmed-to-record program information of program data to be stored in the HDD 6 at the overlapped broadcast time based on execution of the updating program 11H (step S5). More specifically, the CPU 9 renews the programmed-to-record data file 11A such that the storing operation starting time of the drama A becomes 9:00 the storing operation ending time of the drama A becomes 10:00, the storing operation starting time of the drama B becomes 10:00 and the storing operation ending time becomes 11:00.

When the CPU 9 determines in step S4 that the precedence of the programmed-to-record program information of the drama A is higher than the precedence of the programmed-to-record program information of the drama B (step S4; Yes), the CPU 9 renews the programmed-to-record data file 11A such that the programmed-to-record program information of the drama A becomes the programmed-to-record program information of the program data to be stored in the HDD 6 at the overlapped broadcast time (step S6). More specifically, the CPU 9 renews the programmed-to-record data file 11A such that the storing operation starting time of the drama A becomes 9:00 the storing operation ending time of the drama A becomes 10:30, the storing operation starting time of the drama B becomes 10:30 and the storing operation ending time becomes 11:00.

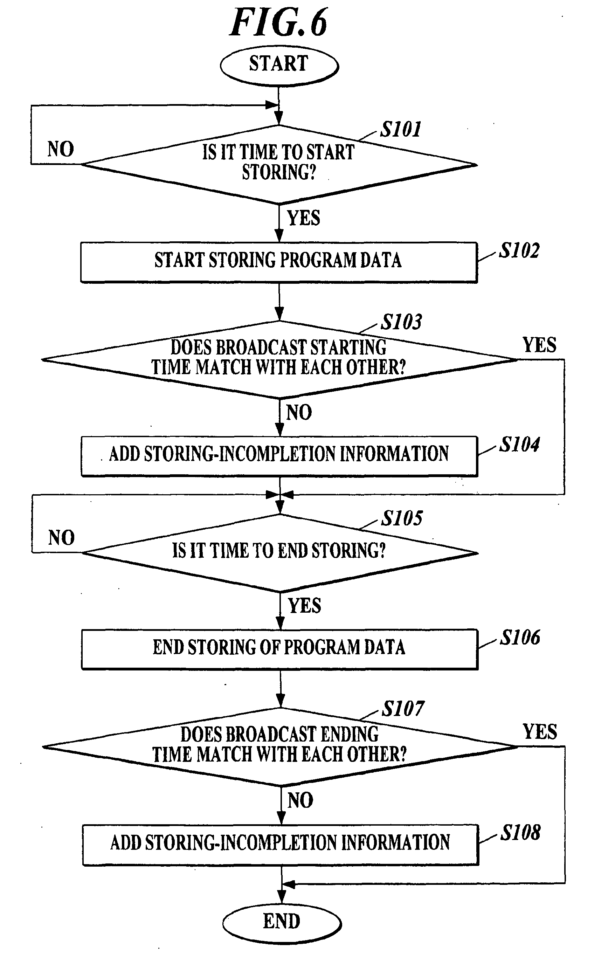

Next, the storing operation of program data of the digital broadcast recording apparatus 100 according to the embodiment will be explained with reference to a flowchart shown in FIG. 6.

First, the CPU 9 executes the storage controlling program 11I and determines whether it's time to start recording operation stored in the programmed-to-record data file 11A (step S101).

When the CPU 9 determines in step S101 that it is not time to start the recording operation (step S101; No), the processing in step S101 is repeated.

When the CPU 9 determines in step S101 that it is time to start the recording operation (step S101; Yes), the CPU 9 controls the tuner section 2, the demodulator 3, the decoder 4 and the encoder 5 based on execution of the storage controlling program 11I, the recording operation of the program data in the channel stored in the programmed-to-record data file 11A is started (step S102), and the CPU 9 refers to the program information of the program data, and determines whether the broadcast-starting time and storing-starting time of the program data match with each other (step S103).

In step S103, when the CPU 9 refers to the program information of the program data, and determines whether the broadcast-starting time and the storing-starting time of the program data match with each other (step S103; Yes), the procedure is shifted to step S105.

In step S103, when the CPU 9 refers to the program information of the program data, and determines whether the broadcast-starting time and the storing-starting time of the program data do not match with each other (step S103; No), the CPU 9 executes the storage controlling program 11I and adds storing-incompletion information to program data stored in the HDD 6 (step S104).

Next, the CPU 9 executes the storage controlling program 11I and determines whether it's time to end the recording operation stored in the programmed-to-record data file 11A (step S105).

In step S105, when the CPU 9 determines whether it is not time to end the recording operation (step S105; No), the processing in step S105 is repeated.

In step S105, when the CPU 9 determines whether it's time to end the recording operation (step S105; Yes), the CPU 9 executes the storage controlling program 11I to end the recording operation of the program data in the channel into the HDD 6 (step S106), and the CPU 9 refers to the program information of the program data and determines whether the broadcast-ending time and the storing-ending time of the program data match with each other (step S107).

In step S107, when the CPU 9 refers to the program information of the program data and determines whether the broadcast-ending time and the storing-ending time of the program data match with each other (step S107; Yes), this processing is completed.

In step S107, when the CPU 9 refers to the program information of the program data and determines whether the broadcast-ending time and the storing-ending time of the program data do not match with each other (step S107; No), the CPU 9 executes the storage controlling program 11I and adds the storing-incompletion information to the program data stored in the HDD 6 (step S108).

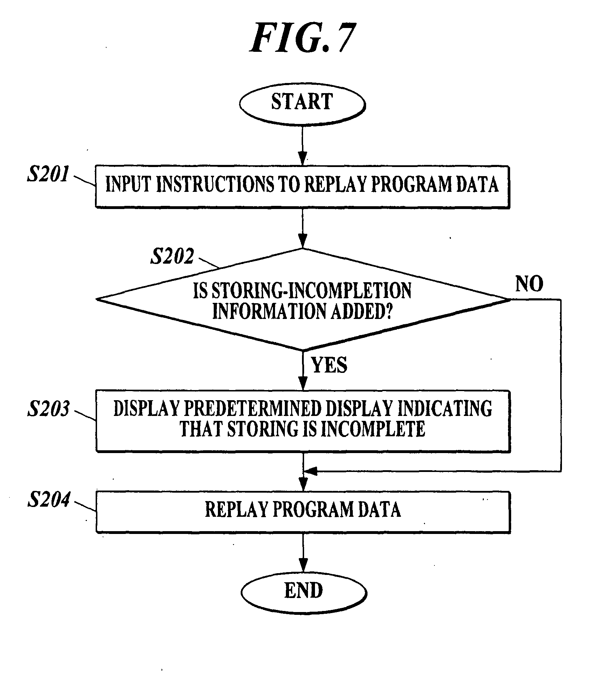

Next, the display control operation of the digital broadcast recording apparatus 100 of the embodiment when program data is replayed will be explained with reference to a flowchart shown in FIG. 7.

First, when an operation signal instructing to replay program data stored in the HDD 6 is input from the input section 7 (step S201), the CPU 9 executes the display controlling program 11J and determines whether storing-incompletion information is added to the program data (step S202).

When the CPU 9 determines in step S202 whether storing-incompletion information is not added to the program data (step S202; No), the procedure is shifted to step S204.

When the CPU 9 determines in step S202 whether storing-incompletion information is added to the program data (step S202; Yes), the CPU 9 executes the display controlling program 11J and shows, on the display device 200, a predetermined display indicating that the program data is stored incompletely (step S203), and the CPU 9 controls the decoder 4 to replay the program data stored in the HDD 6 (step 5204)..

According to the above-explained digital broadcast recording apparatus 100, a title of program data to be stored in the HDD 6 and programmed-to-record program information including storing-starting time and storing-ending time are stored by the programmed-to-record data file 11A, the CPU 9 executes the storage controlling program 11I to control the recording operation of the program data into the HDD 6 based on the programmed-to-record program information stored in the programmed-to-record data file 11A, the CPU 9 executes the extended program retrieving program 11D to refer EPG (Electronic Program Guide) data or program information included in program data, thereby retrieving extended program whose broadcast time may be extended, the CPU 9 executes the programmed-to-record program retrieving program 11E, the programmed-to-record data file 11A is referred to when extended program is retrieved by executing the extended program retrieving program 11D, programmed-to-record program information of program data to be stored in the HDD 6 is retrieved within predetermined time from the broadcast-starting time of the extended program, the CPU 9 executes the determining program 11F to obtain extended time of the extended program from the EPG data, and when the extended time is added to the programmed-to-record program information retrieved by executing the programmed-to-record program retrieving program 11E, it is determined whether there is programmed-to-record program information having overlapped broadcast time, and the CPU 9 executes the setting program 11G and when it is determined that there is programmed-to-record program information having overlapped broadcast time by executing the determining program 11F, precedence in the programmed-to-record program information having the overlapped broadcast time is set in accordance with preset precedence condition, the CPU 9 executes the updating program 11H to renew the programmed-to-record data file 11A such that the programmed-to-record program information having the highest precedence which is set by executing the setting program 11G becomes the programmed-to-record program information of program data to be stored in the HDD 6 at the overlapped broadcast time, and the CPU 9 executes the storage controlling program 11I to store the program data into the HDD 6 at the overlapped broadcast time based on the programmed-to-record program information which is renewed by executing the updating program 11H. Therefore, even when broadcast of a program is extended and this broadcast time is overlapped with the subsequent programmed-to-record program, the precedence of programmed-to-record program having the overlapped broadcast time is automatically set, the subsequent program is recorded based on the precedence, and even if broadcast of a program is extended, it is possible to easily and preferably record the subsequent program.

A title of program data stored in the HDD 6 is stored by the preservation data file 11B, the CPU 9 executes the setting program 11G, and higher precedence is set to programmed-to-record program information having the larger number of program data having the same title stored in the preservation data file 11B among programmed-to-record program information having overlapped broadcast time. Therefore, even when broadcast time of a program which is broadcasted and recorded at regular time every week like serial drama is delayed due to an extended program and recording time of that program and recording time of another program overlap each other, it is possible to preferentially record a program which is broadcasted at regular time every week, and it is possible to avoid a case in which a middle portion of a continuous story cannot be recorded.

The preservation data file 11B includes overwritable/non-overwritable information concerning whether program data stored in the HDD 6 can be overwritten or not, and the setting section sets lower precedence to a case in which program data stored in the preservation data file 11B is overwritable program data than non-overwritable program data, therefore, even if a certain program is broadcasted at regular time every week, when the program is overwritten and preserved and the continuity of contents of the program is not important, lower precedence is set, and a program whose continuity of contents of the program is regarded as important can preferentially be recorded.

The programmed-to-record program information includes information concerning a genre of programs, the precedence data file 11C stores a genre of a program and precedence in association with each other, and the CPU 9 executes the setting program 11G and sets precedence of programmed-to-record program information having overlapped broadcast time based on precedence corresponding to a genre of a program stored in the precedence data file 11C. For example, it is possible to set higher precedence to a program in a genre having a high audience rating or in a genre in which special emphasis is placed on continuity of a story such as serial drama, to set lower precedence to a program in a genre having a low audience rating or in a genre in which special emphasis is not placed on continuity of a story such as variety program.

The CPU 9 executes the setting program 11G, refers to the EPG data and determines whether the programmed-to-record program information having the overlapped broadcast time will be rebroadcasted, and sets precedence of a program which will be rebroadcasted lower than precedence of a program which will not be rebroadcasted, therefore, it is possible to preferentially record a program which will not be rebroadcasted.

The CPU 9 executes the storage controlling program 11I and adds storing-incompletion information to program data stored based on the programmed-to-record program information and stores the same in the HDD 6 when there is time which is not stored in the HDD 6 in the programmed-to-record program information in the overlapped broadcast time, and the CPU 9 executes the display controlling program 11J and determines whether the storing-incompletion information is added to the program data when the program data stored in the HDD 6 is to be replayed, and the CPU 9 displays on the display device 200 that recording of the program data is incomplete when it is determined that the storing-incompletion information is added to the program data, therefore, a program is extended and recording time of this program and recording time of programmed program overlap each other and a portion of the program cannot be recorded, a massage that recording of the program data is incomplete is displayed, and it is possible to prevent a user from misidentifying this case as a trouble.

The CPU 9 executes the setting program 11G, and when it is determined that a program will be rebroadcasted and precedence thereof is set lower than programmed-to-record program information which will not be rebroadcasted and the program data is recorded into the HDD 6 incompletely, the CPU 9 obtains date and time on which the program data is rebroadcasted, and a title of the program data and the obtained date and time may be newly stored in the programmed-to-record data file 11A.

The precedence condition which is preset for setting precedence by executing the setting program 11G by the CPU 9 is not limited to the embodiment, and audio visual histories or the like may be applied.

The storage medium is not limited to the HDD 6 only if the storage medium can store program data, and the storage medium may be a DVD.

The digital broadcast recording apparatus 100, the display device 200 and the sound output device 300 may integrally formed together.

When broadcast-starting time and storing-starting time do not match with each other in step S103 and broadcast-ending time and storing-ending time do not match with each other, the processing in step S108 may be omitted.

When broadcast-starting time and storing-starting time do not match with each other in step S103 and broadcast-ending time and storing-ending time do not match with each other, two storing-incompletion information sets may be added. In this case, when the CPU 9 executes the display controlling program 11J and there is one storing-incompletion information which is added to program data, predetermined display indicating that recording of a front portion or a rear portion of the program data is incomplete may be shown on the display section, and when there are two storing-incompletion information sets added to the program data, predetermined display indicating that recording of a front portion or a rear portion of the program data is incomplete may be shown on the display section.

According to a first aspect of the preferred embodiment of the present invention, there is provided a program data recording apparatus for storing a program data based on a broadcast signal in a storage medium, comprising:
a programmed-to-record storage section for storing a title of the program data to be stored in the storage medium, and programmed-to-record program information including a channel, a storing-starting time and a storing-ending time;
a storing control section for controlling a storing operation for storing the program data in the storage medium based on the programmed-to-record program information stored in the programmed-to-record storage section;
an extended program retrieving section for retrieving an extended program having a possibility of extending a broadcast time in accordance with a preset extension condition by referring to program information included in an electronic program guide data or program information included in the program data;
a programmed-to-record program retrieving section for referring to the programmed-to-record storage section when the extended program retrieving section retrieves the extended program, and for retrieving the programmed-to-record program information of the program data to be stored in the storage medium within a predetermined time from a broadcast-starting time of the extended program;
a determining section for obtaining an extended time of the extended program from the electronic program guide data, and for determining whether there is programmed-to-record program information having an overlapped broadcast time which overlaps for the extended time when the extended time is added to the programmed-to-record program information retrieved by the programmed-to-record program retrieving section;
a setting section for setting a precedence in the programmed-to-record program information having the overlapped broadcast time by a preset precedence condition when the determining section determines that there is the programmed-to-record program information having the overlapped broadcast time; and
an updating section for updating the programmed-to-record storage section such that the programmed-to-record program information having a highest precedence which is set by the setting section becomes the programmed-to-record program information of the program data to be stored in the storage medium during the overlapped broadcast time, wherein
the storing control section stores the program data in the overlapped broadcast time into the storage medium based on the programmed-to-record program information updated by the updating section,
the program data recording apparatus includes a title storage section for storing the title of the program data stored in the storage medium,
the setting section sets a higher precedence to the programmed-to-record program information including the larger number of program data having the same title stored in the title storage section among the programmed-to-record program information having the overlapped broadcast time,
the title storage section includes overwritable/non-overwritable information concerning whether the program data stored in the storage medium is overwritable or not,
the setting section sets the precedence of the program data stored in the title storage section, which is an overwritable program data, lower than the precedence of the program data stored in the title storage section, which is a non-overwritable program data,
the programmed-to-record program information includes information concerning a genre of a program,
the program data recording apparatus includes a precedence condition storage section for storing the genre of the program and the precedence so as to correspond to each other,
the setting section sets the precedence of the programmed-to-record program information having the overlapped broadcast time based on the precedence corresponding to the genre of the program stored in the precedence condition storage section,
the setting section refers to the electronic program guide data, determines whether the programmed-to-record program information having the overlapped broadcast time is rebroadcasted, and sets the precedence of a program which is rebroadcasted lower than the precedence of a program which is not rebroadcasted,
the storing control section adds storing-incompletion information to the program data which is stored based on the programmed-to-record program information and stores the program data in the storage medium when there is a time in which the program data is not stored in the storage medium in the programmed-to-record program information during the overlapped broadcast time, and
the program data recording apparatus includes a display control section for determining whether the storing-incompletion information is added to the program data when the program data stored in the storage medium is replayed, and for displaying that a storing of the program data is incomplete on a display section when it is determined that the storing-incompletion information is added to the program data.

According to the first aspect of the preferred embodiment, the programmed-to-record storage section stores a title of program data to be stored in the storage medium, and programmed-to-record program information including a channel, storing-starting time and storing-ending time, the storing control section controls a recording operation of the program data into the storage medium based on the programmed-to-record program information stored in the programmed-to-record storage section, the extended program retrieving section retrieves extended programs having broadcast time which may be extended in accordance with preset extension conditions by referring to program information included in EPG (Electronic Program Guide) data or program data, the programmed-to-record program retrieving section refers to the programmed-to-record storage section when the extended program retrieving section retrieves an extended program, and searches programmed-to-record program information of program data to be stored in the storage medium within predetermined time from broadcast-starting time of the extended program, the determining section obtains extended time of the extended program from EPG data, and determines whether there is programmed-to-record program information having overlapped broadcast time when the extended time is added to the programmed-to-record program information searched by the programmed-to-record program retrieving section, the setting section sets precedence in the programmed-to-record program information having overlapped broadcast time by preset precedence condition when the determining section determines that there is programmed-to-record program information having overlapped broadcast time, the renewing section renews the programmed-to-record storage section such that the programmed-to-record program information having the highest precedence which is set by the setting section becomes programmed-to-record program information of program data to be stored in the storage medium during the overlapped broadcast time, and the storing control section stores program data in the overlapped broadcast time into the storage medium based on the programmed-to-record program information renewed by the renewing section. Therefore, even when a broadcast of a program is extended and recording time of this program and programmed recording time of a subsequent program overlap each other, precedence of programs having the overlapped recording time is automatically set, and the recording operation is carried out based o this precedence, therefore, even when a broadcast of a program is extended, present invention easily and preferably record a subsequent program.

The title storage section stores a title of program data stored in the storage medium, the setting section sets a higher precedence to programmed-to-record program information having a larger number of program data sets having the same title stored in the title storage section among programmed-to-record program information sets having overlapped broadcast time, therefore, even when a broadcast of a program which is broadcasted and recorded at regular time every week like serial drama is delayed due to an extended program and recording time of that program and recording time of another program overlap each other, it is possible to preferentially record a program which is broadcasted at regular time every week, and it is possible to avoid a case in which a middle portion of a continuous story cannot be recorded.

The title storage section includes overwritable/non-overwritable information concerning whether program data stored in the storage medium can be overwritten or not, and the setting section sets lower precedence to a case in which program data stored in the title storage section is overwritable program data than non-overwritable program data, therefore, even if a certain program is broadcasted at regular time every week, when the program is overwritten and preserved and the continuity of contents of the program is not important, lower precedence is set, and a program whose continuity of contents of the program is regarded as important can preferentially be recorded.

The programmed-to-record program information includes information concerning a genre of programs, the precedence condition storage section stores a genre of a program and precedence in association with each other, and the setting section sets precedence of programmed-to-record program information having overlapped broadcast time based on precedence corresponding to a genre of a program stored in the precedence condition storage section. For example, it is possible to set higher precedence to a program in a genre having a high audience rating or in a genre in which special emphasis is placed on continuity of a story such as serial drama, to set lower precedence to a program in a genre having a low audience rating or in a genre in which special emphasis is not placed on continuity of a story such as variety program.

The setting section refers to the EPG data, determines whether the programmed-to-record program information having the overlapped broadcast time will be rebroadcasted, and sets precedence of a program which will be rebroadcasted lower than precedence of a program which is not rebroadcasted, therefore, it is possible to preferentially record a program which is not rebroadcasted.

The storing control section adds storing-incompletion information to program data stored based on the programmed-to-record program information and stores the same in the storage medium when there is time which is not stored in the storage medium in the programmed-to-record program information in the overlapped broadcast time, and the display control section determines whether the storing-incompletion information is added to the program data when the program data stored in the storage medium is to be replayed, and the display control section displays on a display section that recording of the program data is incomplete when it is determined that the storing-incompletion information is added to the program data, therefore, a program is extended and recording time of this program and recording time of programmed program overlap each other and a portion of the program cannot be recorded, a display that recording of the program data is incomplete is displayed, and it is possible to prevent a user from misidentifying this case as a trouble.

According to a second aspect, not part of the present invention, there is provided a program data recording apparatus for storing a program data based on a broadcast signal in a storage medium, comprising:
a programmed-to-record storage section for storing a title of the program data to be stored in the storage medium, and programmed-to-record program information including a channel, a storing-starting time and a storing-ending time;
a storing control section for controlling a storing operation for storing the program data in the storage medium based on the programmed-to-record program information stored in the programmed-to-record storage section;
an extended program retrieving section for retrieving an extended program having a possibility of extending a broadcast time in accordance with a preset extension condition by referring to program information included in an electronic program guide data or program information included in the program data;
a programmed-to-record program retrieving section for referring to the programmed-to-record storage section when the extended program retrieving section retrieves the extended program, and for retrieving the programmed-to-record program information of the program data to be stored in the storage medium within a predetermined time from a broadcast-starting time of the extended program;
a determining section for obtaining an extended time of the extended program from the electronic program guide data, and for determining whether there is programmed-to-record program information having an overlapped broadcast time which overlaps for the extended time when the extended time is added to the programmed-to-record program information retrieved by the programmed-to-record program retrieving section;
a setting section for setting a precedence in the programmed-to-record program information having the overlapped broadcast time by a preset precedence condition when the determining section determines that there is the programmed-to-record program information having the overlapped broadcast time; and
an updating section for updating the programmed-to-record storage section such that the programmed-to-record program information having a highest precedence which is set by the setting section becomes the programmed-to-record program information of the program data to be stored in the storage medium during the overlapped broadcast time, wherein
the storing control section stores the program data in the overlapped broadcast time into the storage medium based on the programmed-to-record program information updated by the updating section.

According to the second aspect of the preferred embodiment, the programmed-to-record storage section stores a title of program data to be stored in the storage medium, and programmed-to-record program information including a channel, storing-starting time and storing-ending time, the storing control section controls a recording operation of the program data into the storage medium based on the programmed-to-record program information stored in the programmed-to-record storage section, the extended program retrieving section retrieves extended programs having broadcast time which may be extended in accordance with preset extension conditions by referring to program information included in EPG (Electronic Program Guide) data or program data, the programmed-to-record program retrieving section refers to the programmed-to-record storage section when the,extended program retrieving section retrieves an extended program, and retrieves programmed-to-record program information of program data to be stored in the storage medium within predetermined time from broadcast-starting time of the extended program, the determining section obtains extended time of the extended program from EPG data, and determines whether there is programmed-to-record program information having overlapped broadcast time when the extended time is added to the programmed-to-record program information searched by the programmed-to-record program retrieving section, the setting section sets precedence in the programmed-to-record program information having overlapped broadcast time by preset precedence condition when the determining section determines that there is programmed-to-record program information having overlapped broadcast time, the renewing section renews the programmed-to-record storage section such that the programmed-to-record program information having the highest precedence which is set by the setting section becomes programmed-to-record program information of program data to be stored in the storage medium during the overlapped broadcast time, the storing control section stores program data in the overlapped broadcast time into the storage medium based on the programmed-to-record program information renewed by the renewing section. Therefore, even when a broadcast of a program is extended and recording time of this program and programmed recording time of a subsequent program overlap each other, precedence of programs having the overlapped recording time is automatically set, and the recording operation is carried out based o this precedence, therefore, even when a broadcast of a program is extended, present invention easily and preferably record a subsequent program.

Preferably, the program data recording apparatus further comprises a title storage section for storing the title of the program data stored in the storage medium, wherein,
the setting section sets a higher precedence to the programmed-to-record program information including the larger number of program data having the same title stored in the title storage section among the programmed-to-record program information having the overlapped broadcast time.

The title storage section stores a title of program data stored in the storage medium, the setting section sets a higher precedence to programmed-to-record program information having a larger number of program data sets having the same title stored in the title storage section among programmed-to-record program information sets having overlapped broadcast time, therefore, even when a broadcast of a program which is broadcasted and recorded at regular time every week like serial drama is delayed due to an extended program and recording time of that program and recording time of another program overlap each other, it is possible to preferentially record a program which is broadcasted at regular time every week, and it is possible to avoid a case in which a middle portion of a continuous story cannot be recorded.

Preferably, the title storage section includes overwritable/non-overwritable information concerning whether the program data stored in the storage medium is overwritable or not, and
the setting section sets the precedence of the program data stored in the title storage section, which is an overwritable program data, lower than the precedence of the program data stored in the title storage section, which is a non-overwritable program data.

The title storage section includes overwritable/non-overwritable information concerning whether program data stored in the storage medium can be overwritten or not, and the setting section sets lower precedence to a case in which program data stored in the title storage section is overwritable program data than non-overwritable program data, therefore, even if a certain program is broadcasted at regular time every week, when the program is overwritten and preserved and the continuity of contents of the program is not important, lower precedence is set, and a program whose continuity of contents of the program is regarded as important can preferentially be recorded.

Preferably, the programmed-to-record program information includes information concerning a genre of a program,
the program data recording apparatus includes a precedence condition storage section for storing the genre of the program and the precedence so as to correspond to each other, and
the setting section sets the precedence of the programmed-to-record program information having the overlapped broadcast time based on the precedence corresponding to the genre of the program stored in the precedence condition storage section.

The programmed-to-record program information includes information concerning a genre of programs, the precedence condition storage section stores a genre of a program and precedence in association with each other, and the setting section sets precedence of programmed-to-record program information having overlapped broadcast time based on precedence corresponding to a genre of a program stored in the precedence condition storage section. For example, it is possible to set higher precedence to a program in a genre having a high audience rating or in a genre in which special emphasis is placed on continuity of a story such as serial drama, to set lower precedence to a program in a genre having a low audience rating or in a genre in which special emphasis is not placed on continuity of a story such as variety program.

Preferably, the setting section refers to the electronic program guide data, determines whether the programmed-to-record program information having the overlapped broadcast time is rebroadcasted, and sets the precedence of a program which is rebroadcasted lower than the precedence of a program which is not rebroadcasted.

The setting section refers to the EPG data, determines whether the programmed-to-record program information having the overlapped broadcast time will be rebroadcasted, and sets precedence of a program which will be rebroadcasted lower than precedence of a program which is not rebroadcasted, therefore, it is possible to preferentially record a program which is not rebroadcasted.

Preferably, the storing control section adds storing-incompletion information to the program data which is stored based on the programmed-to-record program information and stores the program data in the storage medium when there is a time in which the program data is not stored in the storage medium in the programmed-to-record program information during the overlapped broadcast time, and
the program data recording apparatus includes a display control section for determining whether the storing-incompletion information is added to the program data when the program data stored in the storage medium is replayed, and for displaying that a storing of the program data is incomplete on a display section when it is determined that the storing-incompletion information is added to the program data.

The storing control section adds storing-incompletion information to program data stored based on the programmed-to-record program information and stores the same in the storage medium when there is time which is not stored in the storage medium in the programmed-to-record program information in the overlapped broadcast time, and the display control section determines whether the storing-incompletion information is added to the program data when the program data stored in the storage medium is to be replayed, and the display control section displays on a display section that recording of the program data is incomplete when it is determined that the storing-incompletion information is added to the program data, therefore, a program is extended and recording time of this program and recording time of programmed program overlap each other and a portion of the program cannot be recorded, a massage that recording of the program data is incomplete is displayed, and it is possible to prevent a user from misidentifying this case as a trouble.

Although various exemplary embodiments have been shown and described, the invention is not limited to the embodiments shown. Therefore, the scope of the invention is intended to be limited solely by the scope of the claims that follow.

## Claims

1. A program data recording apparatus for storing a program data based on a broadcast signal in a storage medium (6, 11), comprising:
a programmed-to-record storage section (11A) for storing a title of the program data to be stored in the storage medium (6, 11), and programmed-to-record program information including a channel, a storing-starting time and a storing-ending time;
a storing control section (11I) for controlling a storing operation for storing the program data in the storage medium (6, 11) based on the programmed-to-record program information stored in the programmed-to-record storage section (11A);
an extended program retrieving section (11D) for retrieving an extended program having a possibility of extending a broadcast time in accordance with a preset extension condition by referring to program information included in an electronic program guide data or program information included in the program data;
a programmed-to-record program retrieving section (11E) for referring to the programmed-to-record storage section (11A) when the extended program retrieving section (11D) retrieves the extended program, and for retrieving the programmed-to-record program information of the program data to be stored in the storage medium (6, 11) within a predetermined time from a broadcast-starting time of the extended program;
a determining section (11 F) for obtaining an extended time of the extended program from the electronic program guide data, and for determining whether there is programmed-to-record program information having an overlapped broadcast time which overlaps for the extended time when the extended time is added to the programmed-to-record program information retrieved by the programmed-to-record program retrieving section (11E);
a setting section (11G) for setting a precedence in the programmed-to-record program information having the overlapped broadcast time by a preset precedence condition when the determining section (11F) determines that there is the programmed-to-record program information having the overlapped broadcast time; and
an updating section (11H) for updating the programmed-to-record storage section (11A) such that the programmed-to-record program information having a highest precedence which is set by the setting section (11G) becomes the programmed-to-record program information of the program data to be stored in the storage medium (6, 11) during the overlapped broadcast time, wherein
the storing control section (11I) stores the program data in the overlapped broadcast time into the storage medium (6, 11) based on the programmed-to-record program information updated by the updating section (11 H),
**characterized in that**
the program data recording apparatus further comprises a title storage section (11 B) for storing the title of the program data stored in the storage medium (6, 11), wherein,
the title storage section (11B) includes overwritable/non-overwritable information concerning whether the program data stored in the storage medium (6, 11) is overwritable or not, and
the setting section (11G) sets the precedence of the program data stored in the title storage section (11 B), which is an overwritable program data, lower than the precedence of the program data stored in the title storage section (11 B), which is a non-overwritable program data.

2. The program data recording apparatus according to claim 1, wherein the programmed-to-record program information includes information concerning a genre
of a program,
the program data recording apparatus includes a precedence condition storage section (11 C) for storing the genre of the program and the precedence so as to correspond to each other,
the setting section (11G) sets the precedence of the programmed-to-record program information having the overlapped broadcast time based on the precedence corresponding to the genre of the program stored in the precedence condition storage section (11 C), and
the setting section (11G) refers to the electronic program guide data, determines whether the programmed-to-record program information having the overlapped broadcast time is rebroadcasted, and sets the precedence of a program which is rebroadcasted lower than the precedence of a program which is not rebroadcasted,
the setting section (11G) sets a higher precedence to the programmed-to-record program information including the larger number of program data having the same title stored in the title storage section (11B) among the programmed-to-record program information having the overlapped broadcast time,
the storing control section (11I) adds storing-incompletion information to the program data which is stored based on the programmed-to-record program information and stores the program data in the storage medium (6, 11) when there is a time in which the program data is not stored in the storage medium (6, 11) in the programmed-to-record program information during the overlapped broadcast time, and
the program data recording apparatus includes a display control section (11J) for determining whether the storing-incompletion information is added to the program data when the program data stored in the storage medium (6, 11) is replayed, and for displaying that a storing of the program data is incomplete on a display section (200) when it is determined that the storing-incompletion information is added to the program data.

3. The program data recording apparatus according to claim 1, wherein the setting section sets a higher precedence to the programmed-to-record program information including the larger number of program data having the same title stored in the title storage section among the programmed-to-record program information having the overlapped broadcast time.

4. The program data recording apparatus according to claim 1 or 3, wherein
the programmed-to-record program information includes information concerning a genre of a program,
the program data recording apparatus includes a precedence condition storage section (11 C) for storing the genre of the program and the precedence so as to correspond to each other, and
the setting section (11G) sets the precedence of the programmed-to-record program information having the overlapped broadcast time based on the precedence corresponding to the genre of the program stored in the precedence condition storage section (11C).

5. The program data recording apparatus according to any one of the claims 1, 3 or 4, wherein
the setting section (11G) refers to the electronic program guide data, determines whether the programmed-to-record program information having the overlapped broadcast time is rebroadcasted, and sets the precedence of a program which is rebroadcasted lower than the precedence of a program which is not rebroadcasted.

6. The program data recording apparatus according to any one of the claims 1, 3 to 5, wherein
the storing control section (11I) adds storing-incompletion information to the program data which is stored based on the programmed-to-record program information and stores the program data in the storage medium (6, 11) when there is a time in which the program data is not stored in the storage medium (6, 11) in the programmed-to-record program information during the overlapped broadcast time, and
the program data recording apparatus includes a display control section (11J) for determining whether the storing-incompletion information is added to the program data when the program data stored in the storage medium (6, 11) is replayed, and for displaying that a storing of the program data is incomplete on a display section (200) when it is determined that the storing-incompletion information is added to the program data.

## Patentansprüche

1. Programmdaten-Aufzeichnungsvorrichtung zum Speichern von Programmdaten beruhend auf einem Rundfunksignal (Original: broadcast signal) in einem Speichermedium (6, 11), umfassend:
einen "Zum-Aufzeichnen-Programmiert"-Speicherabschnitt (11A) zum Speichern eines Titels der in dem Speichermedium (6, 11) aufzuzeichnenden Programmdaten und von Information über ein zum Aufzeichnen programmiertes Programm einschließlich eines Kanals, einer Speicherstartzeit und einer Speicherendzeit;
einen Speichersteuerabschnitt (11I) zum Steuern eines Speichervorgangs zum Speichern der Programmdaten in dem Speichermedium (6, 11) beruhend auf der Information über ein zum Aufzeichnen programmiertes Programm, die in dem "Zum-Aufzeichnen-Programmiert"-Speicherabschnitt (11A) gespeichert ist;
einen Gewinnungsabschnitt (11D) für ein verlängertes Programm zum Gewinnen eines verlängerten Programms mit einer Möglichkeit des Verlängerns einer Sendezeit gemäß einer voreingestellten Verlängerungsbedingung durch Bezugnahme auf in einem elektronischen Programmführer enthaltene Programminformation oder in den Programmdaten enthaltene Programminformation;
einen Gewinnungsabschnitt (11E) für ein zum Aufzeichnen programmiertes Programm zum Abfragen des "Zum-Aufzeichnen-Programmiert"-Speicherabschnitts (11A), wenn der Gewinnungsabschnitt (11D) für ein verlängertes Programm das verlängerte Programm gewinnt, und zum Gewinnen der Information über ein zum Aufzeichnen programmiertes Programm der in dem Speichermedium (6, 11) zu speichernden Programmdaten, innerhalb einer vorbestimmten Zeit von einer Sendestartzeit des verlängerten Programms;
einen Bestimmungsabschnitt (11 F) zum Beschaffen einer verlängerten Zeit des verlängerten Programms aus den Daten des elektronischen Programmführers und zum Bestimmen, ob es Information über ein zum Aufzeichnen programmiertes Programm gibt, die eine überlappende Sendezeit hat, die für die verlängerte Zeit überlappt, wenn die verlängerte Zeit zu der durch den Gewinnungsabschnitt (11 E) für ein zum Aufzeichnen programmiertes Programm gewonnenen Information über ein zum Aufzeichnen programmiertes Programm hinzugefügt wird;
einen Festsetzungsabschnitt (11G) zum Festsetzen einer Rangordnung in der Information über ein zur Aufzeichnung programmiertes Programm mit der überlappenden Sendezeit durch eine voreingestellte Rangordnungsbedingung, wenn der Bestimmungsabschnitt (11 F) bestimmt, dass es die Information über ein zur Aufzeichnung programmiertes Programm mit der überlappenden Sendezeit gibt; und
einen Aktualisierungsabschnitt (11 H) zum Aktualisieren des "Zum-Aufzeichnen-Programmiert"-Speicherabschnitts (11A), so dass die Information über ein zum Aufzeichnen programmiertes Programm mit einer höchsten Rangordnung, die von dem Festsetzungsabschnitt (11G) festgesetzt wurde, die Information über ein zur Aufzeichnung programmiertes Programm der in dem Speichermedium (6, 11) zu speichernden Programmdaten während der überlappenden Sendezeit wird, wobei
der Speichersteuerabschnitt (11I) die Programmdaten während der überlappenden Sendezeit in das Speichermedium (6, 11) beruhend auf der von dem Aktualisierungsabschnitt (11H) aktualisierten Information über ein zur Aufzeichnung programmiertes Programm speichert,
**dadurch gekennzeichnet, dass**
die Programmdaten-Aufzeichnungsvorrichtung weiterhin einen Titelspeicherabschnitt (11 B) zum Speichern des Titels der in dem Speichermedium (6, 11) gespeicherten Programmdaten umfasst, wobei
der Titelspeicherabschnitt (11 B) "überschreibbar/nicht überschreibbar"-Information betreffs dessen, ob die in dem Speichermedium (6, 11) gespeicherten Programmdaten überschreibbar sind oder nicht, enthält, und
der Festsetzungsabschnitt (11G) die Rangordnung der in dem Titelspeicherabschnitt (11 B) gespeicherten Programmdaten, die überschreibbare Programmdaten sind, niedriger als die Rangordnung der in dem Titelspeicherabschnitt (11 B) gespeicherten Programmdaten festsetzt, die nicht überschreibbare Programmdaten sind.

2. Programmdaten-Aufzeichnungsvorrichtung nach Anspruch 1, wobei
die Information über ein zur Aufzeichnung programmiertes Programm Informationen betreffs eines Genres eines Programms enthält,
die Programmdaten-Aufzeichnungsvorrichtung einen Rangordnungsbedingungs-Speicherabschnitt (11 C) zum Speichern des Genres des Programms und der Rangordnung in einander entsprechender Weise enthält,
der Festsetzungsabschnitt (11G) die Rangordnung der Information über ein zur Aufzeichnung programmiertes Programm mit der überlappenden Sendezeit beruhend auf der dem Genre des Programms entsprechenden Rangordnung, gespeichert in dem Rangordnungsbedingungs-Speicherabschnitt (11 C), festsetzt, und
der Festsetzungsabschnitt (11G) auf die Daten des elektronischen Programmführers Bezug nimmt, bestimmt, ob die Information über ein zur Aufzeichnung programmiertes Programm mit der überlappenden Sendezeit erneut gesendet wird, und die Rangordnung eines Programms, welches erneut gesendet wird, niedriger festsetzt, als die Rangordnung eines Programms, welches nicht erneut gesendet wird,
der Festsetzungsabschnitt (11G) derjenigen Information über ein zum Aufzeichnen programmiertes Programm, die die höhere Anzahl von Programmdaten mit demselben in dem Titelspeicherabschnitt (11 B) gespeicherten Titel enthält, unter der Information über ein zur Aufzeichnung programmiertes Programm mit der überlappenden Sendezeit eine höhere Rangordnung festsetzt,
der Speichersteuerabschnitt (111) den beruhend auf der Information über ein zur Aufzeichnung programmiertes Programm gespeicherten Programmdaten "unvollständiges-Speichern"-Information hinzufügt und die Programmdaten in dem Speichermedium (6, 11) speichert, wenn es in der Information über ein zum Aufzeichnen programmiertes Programm eine Zeit während der überlappenden Sendezeit gibt, in der die Programmdaten nicht in dem Speichermedium (6, 11) gespeichert werden, und
die Programmdaten-Aufzeichnungsvorrichtung einen Anzeigesteuerabschnitt (11J) zum Bestimmen, ob die "unvollständiges-Speichern"-Information den Programmdaten hinzugefügt ist, wenn die in dem Speichermedium (6, 11) gespeicherten Programmdaten abgespielt werden, und zum Anzeigen, dass ein Speichern der Programmdaten unvollständig ist, auf einem Anzeigeabschnitt (200), wenn bestimmt wird, dass die "unvollständiges-Speichern"-Information den Programmdaten hinzugefügt ist, enthält.

3. Programmdaten-Aufzeichnungsvorrichtung nach Anspruch 1, wobei der Festsetzungsabschnitt derjenigen Information über ein zum Aufzeichnen programmiertes Programm, die die höhere Anzahl von Programmdaten mit demselben in dem Titelspeicherabschnitt gespeicherten Titel enthält, unter der Information über ein zur Aufzeichnung programmiertes Programm mit der überlappenden Sendezeit eine höhere Rangordnung festsetzt.

4. Programmdaten-Aufzeichnungsvorrichtung nach Anspruch 1 oder 3, wobei
die Information über ein zur Aufzeichnung programmiertes Programm Informationen betreffs eines Genres eines Programms enthält,
die Programmdaten-Aufzeichnungsvorrichtung einen Rangordnungsbedingungs-Speicherabschnitt (11 C) zum Speichern des Genres des Programms und der Rangordnung in einander entsprechender Weise enthält,
der Festsetzungsabschnitt (11G) die Rangordnung der Information über ein zur Aufzeichnung programmiertes Programm mit der überlappenden Sendezeit beruhend auf der dem Genre des Programms entsprechenden Rangordnung, gespeichert in dem Rangordnungsbedingungs-Speicherabschnitt (11C), festsetzt.

5. Programmdaten-Aufzeichnungsvorrichtung nach einem der Ansprüche 1, 3 oder 4, wobei
der Festsetzungsabschnitt (11G) auf die Daten des elektronischen Programmführers Bezug nimmt, bestimmt, ob die Information über ein zur Aufzeichnung programmiertes Programm mit der überlappenden Sendezeit erneut gesendet wird, und die Rangordnung eines Programms, welches erneut gesendet wird, niedriger festsetzt, als die Rangordnung eines Programms, welches nicht erneut gesendet wird.

6. Programmdaten-Aufzeichnungsvorrichtung nach einem der Ansprüche 1, 3 bis 5, wobei
der Speichersteuerabschnitt (111) den beruhend auf der Information über ein zur Aufzeichnung programmiertes Programm gespeicherten Programmdaten "unvollständiges-Speichern"-Information hinzufügt und die Programmdaten in dem Speichermedium (6, 11) speichert, wenn es in der Information über ein zum Aufzeichnen programmiertes Programm eine Zeit während der überlappenden Sendezeit gibt, in der die Programmdaten nicht in dem Speichermedium (6, 11) gespeichert werden, und
die Programmdaten-Aufzeichnungsvorrichtung einen Anzeigesteuerabschnitt (11J) zum Bestimmen, ob die "unvollständiges-Speichern"-Information den Programmdaten hinzugefügt ist, wenn die in dem Speichermedium (6, 11) gespeicherten Programmdaten abgespielt werden, und zum Anzeigen, dass ein Speichern der Programmdaten unvollständig ist, auf einem Anzeigeabschnitt (200), wenn bestimmt wird, dass die "unvollständiges-Speichern"-Information den Programmdaten hinzugefügt ist, enthält.

## Revendications

1. Appareil d'enregistrement de données de programme pour stocker des données de programme basées sur un signal de diffusion sur un support de stockage (6, 11), comprenant :
une section de stockage programmée-pour-enregistrer (11A) pour stocker un titre des données de programme à enregistrer sur le support de stockage (6, 11), et de l'information de programme programmée-pour-enregister comprenant un canal, un temps de début de stockage et un temps de fin de stockage ;
une section de contrôle de stockage (11I) destinée à contrôler une opération de stockage pour stocker les données de programme sur le support de stockage (6, 11) sur base de l'information de programme programmée-pour-enregister stockée dans la section de stockage programmée-pour-enregistrer (11A) ;
une section d'extraction de programme étendu (11D) pour extraire un programme étendu présentant une possibilité d'étendre une durée de diffusion en fonction d'une condition d'extension préétablie en référant à de l'information de programme comprise dans des données guides de programme électronique ou à de l'information de programme comprise dans les données de programme ;
une section d'extraction de programme programmée-pour-enregistrer (11E) pour référer à la section de stockage programmée-pour-enregistrer (11A) lorsque la section d'extraction de programme étendu (11D) extrait le programme étendu, et pour extraire l'information de programme programmée-pour-enregister des données de programme à stocker sur le support de stockage (6, 11) dans une durée prédéterminée à partir d'un temps de début de diffusion du programme étendu ;
une section de détermination (11F) pour obtenir une durée étendue du programme étendu à partir des données guides de programme électronique, et pour déterminer s'il y a de l'information de programme programmée-pour-enregister présentant une durée de diffusion chevauchée qui chevauche la durée étendue lorsque la durée étendue est ajoutée à l'information de programme programmée-pour-enregister extraite par la section d'extraction de programme programmée-pour-enregistrer (11E) ;
une section de réglage (11G) pour régler une priorité dans l'information de programme programmée-pour-enregister comportant la durée de diffusion chevauchée selon une condition de priorité préétablie lorsque la section de détermination (11F) détermine qu'il existe de l'information de programme programmée-pour-enregister comportant la durée de diffusion chevauchée ; et
une section de mise à jour (11H) pour mettre à jour la section de stockage programmée-pour-enregistrer (11A) de telle sorte que l'information de programme programmée-pour-enregister ayant la plus haute priorité qui est réglée par la section de réglage (11G) devient l'information de programme programmée-pour-enregister des données de programme à stocker sur le support de stockage (6, 11) durant la durée de diffusion chevauchée, dans lequel
la section de contrôle de stockage (11I) stocke les données de programme dans la durée de diffusion chevauchée sur le support de stockage (6, 11) sur base de l'information de programme programmée-pour-enregister mise à jour par la section de mise à jour (11H),
**caractérisé en ce que**
l'appareil d'enregistrement de données de programme comprend en outre une section de stockage de titre (11B) pour stocker le titre des données de programme stockées sur le support de stockage (6, 11), dans lequel
la section de stockage de titre (11B) comprend de l'information réinscriptible/non réinscriptible concernant le fait que les données de programme stockées sur le support de stockage (6, 11) sont réinscriptibles ou non, et
la section de réglage (11G) règle la priorité des données de programme stockées dans la section de stockage de titre (11B) qui sont des données de programme réinscriptibles comme étant inférieure à la priorité des données de programme stockées dans la section de stockage de titre (11B) qui sont des données de programme non réinscriptibles.

2. Appareil d'enregistrement de données de programme selon la revendication 1, dans lequel
l'information de programme programmée-pour-enregister comprend de l'information concernant un genre de programme,
l'appareil d'enregistrement de données de programme comprend une section de stockage de condition de priorité (11C) pour stocker le genre du programme et la priorité de manière à ce qu'ils correspondent entre eux,
la section de réglage (11G) règle la priorité de l'information de programme programmée-pour-enregister ayant la durée de diffusion chevauchée sur base de la priorité correspondant au genre du programme stocké dans la section de stockage de condition de priorité (11C), et
la section de réglage (11G) réfère aux données guides du programme électronique, détermine si l'information de programme programmée-pour-enregister comportant la durée de diffusion chevauchée est rediffusée ou non, et règle la priorité d'un programme qui est rediffusé pour qu'elle soit inférieure à la priorité d'un programme qui n'est pas rediffusé,
la section de réglage (11G) règle une priorité supérieure pour l'information de programme programmée-pour-enregister qui comprend le nombre plus élevé de données de programme ayant le même titre stocké dans la section de stockage de titre (11B) parmi l'information de programme programmée-pour-enregister ayant la durée de diffusion chevauchée,
la section de contrôle de stockage (11I) ajoute de l'information stockage-incomplet aux données de programme qui sont stockées sur base de l'information de programme programmée-pour-enregister et stocke les données de programme sur le support de stockage (6, 11) lorsqu'il existe un temps où les données de programme ne sont pas stockées sur le support de stockage (6, 11) dans l'information de programme programmée-pour-enregister durant la durée de diffusion chevauchée, et
l'appareil d'enregistrement de données de programme comprend une section de commande d'affichage (11J) pour déterminer si l'information stockage-incomplet est ajoutée aux données de programme lorsque les données de programme stockées sur le support de stockage (6, 11) sont relues, et pour afficher qu'un stockage des données de programme est incomplet sur une section d'affichage (200) lorsqu'il est déterminé que l'information stockage-incomplet est ajoutée aux données de programme.

3. Appareil d'enregistrement de données de programme selon la revendication 1, dans lequel la section de réglage règle une priorité supérieure pour l'information de programme programmée-pour-enregister qui comprend le nombre plus grand de données de programme ayant le même titre stocké dans la section de stockage de titre parmi l'information de programme programmée-pour-enregister ayant la durée de diffusion chevauchée.

4. Appareil d'enregistrement de données de programme selon la revendication 1 ou 3, dans lequel
l'information de programme programmée-pour-enregister comprend de l'information concernant un genre de programme,
l'appareil d'enregistrement de données de programme comprend une section de stockage de condition de priorité (11C) pour stocker le genre du programme et la priorité de manière à ce qu'ils correspondent entre eux, et
la section de réglage (11G) règle la priorité de l'information de programme programmée-pour-enregister ayant la durée de diffusion chevauchée sur base de la priorité correspondant au genre du programme stocké dans la section de stockage de condition de priorité (11C).

5. Appareil d'enregistrement de données de programme selon l'une quelconque des revendications 1, 3 ou 4, dans lequel
la section de réglage (11G) réfère aux données guides du programme électronique, détermine si l'information de programme programmée-pour-enregister comportant la durée de diffusion chevauchée est rediffusée ou non, et règle la priorité d'un programme qui est rediffusé pour qu'elle soit inférieure à la priorité d'un programme qui n'est pas rediffusé.

6. Appareil d'enregistrement de données de programme selon l'une quelconque des revendications 1 et 3 à 5, dans lequel
la section de contrôle de stockage (11I) ajoute de l'information stockage-incomplet aux données de programme qui sont stockées sur base de l'information de programme programmée-pour-enregister et stocke les données de programme sur le support de stockage (6, 11) lorsqu'il existe un temps où les données de programme ne sont pas stockées sur le support de stockage (6, 11) dans l'information de programme programmée-pour-enregister durant la durée de diffusion chevauchée, et
l'appareil d'enregistrement de données de programme comprend une section de commande d'affichage (11J) pour déterminer si l'information stockage-incomplet est ajoutée aux données de programme lorsque les données de programme stockées sur le support de stockage (6, 11) sont relues, et pour afficher qu'un stockage des données de programme est incomplet sur une section d'affichage (200) lorsqu'il est déterminé que l'information stockage-incomplet est ajoutée aux données de programme.
